# EUROPÄISCHE PATENTSCHRIFT

(11) **EP 0 714 274 B1**
(45) Veröffentlichungstag und Bekanntmachung des Hinweises auf die Patenterteilung: **14.05.1997**
(21) Anmeldenummer: 94924879.3
(22) Anmeldetag: 16.08.1994
(51) Int. Cl.: A61H 33/06

(54) **KABINE MIT EINER FLÄCHENHEIZUNG**
CABIN WITH A RADIANT HEATING SYSTEM
CABINE POURVUE D'UN SYSTEME DE CHAUFFAGE RADIANT

(30) Priorität: 16.08.1993 DE 4327542
(43) Veröffentlichungstag der Anmeldung: 05.06.1996
(73) Patentinhaber: Kurz, Hubert, Dr., D-81477 München (DE)
(72) Erfinder: Kurz, Hubert, Dr., D-81477 München (DE)
(74) Vertreter: Grünecker, Kinkeldey, Stockmair & Schwanhäusser Anwaltssozietät
(86) Internationale Anmeldenummer: EP9402730
(87) Internationale Veröffentlichungsnummer: WO9505142

(56) Entgegenhaltungen:
- EP-A- 0 287 106
- WO-A-90/01918
- DE-A- 3 223 447
- DE-U- 8 913 884
- FR-A- 2 053 727

## Beschreibung

Die Erfindung bezieht sich auf eine Kabine, insbesondere eine Saunakabine, mit einer in einer Seitenwand integrierten Heizung.

Aus der DE 32 23 447 ist eine Kabine bekannt, bei der ein herkömmlicher Heizofen verflacht ausgebildet und in die Seitenwand integriert ist. Durch einen zwischen einer Innen- und einer Außenwandschicht gebildeten Raumkanal strömt Luft in Folge von Konvektion zu einer oberen Austrittsöffnung und beheizt damit die Saunakabine. Nachteiligerweise wird damit der Kabineninnenraum von einer kleinflächigen und komprimierten Heizung punktuell beheizt. Die gesamte von der Heizung erzeugte Heizleistung muß von ihrem Aufstellungsort in der Seitenwand aus im Raum verteilt werden. Dies geschieht vornehmlich durch künstlich erzeugte Luftströmungen oder Konvektion. Als Folge davon bilden sich im Raum auch unangenehmere kältere Stellen.

Zudem entsteht ein erhebliches Wärmegefälle von oben nach unten das von vielen Benutzern als unangenehm empfunden wird. Dabei dauert der Aufheizvorgang der Wände relativ lang. Die Vorbereitungszeit bedingt erhebliche Energieverluste, da während dieser Zeit durch die Wände, Decke und den Boden und den Luftwechsel erhebliche Energie abfließt und vom Ofen nachgeliefert werden muß.

Andere Bauvariante schlagen vor, den im Kabinenraum angeordneten Ofen lang und schmal auszubilden. Er ist in Bodennähe vor eine Wand gesetzt und verfügt als Berührungsschutz über eine Verkleidung. Nachteiligerweise nimmt dieser Ofen genau so viel Platz ein wie ein herkömmlicher im Saunaraum aufgestellter Ofen mit quadratischer Stellfläche, die damit nur ins längliche gezogen ist.

Schließlich ist es noch bekannt, den Saunaofen in der Kabinendecke anzuordnen. Damit spart man sich die Bodenstellfläche gänzlich, es entfällt allerdings die thermische Konvektion, so daß ein Walzenlüfter notwendig ist, der für die gewünschte Umwälzung der Luft sorgen soll. Da die Hitze in diesem Fall von oben kommt ergibt sich eine physiologisch ungünstige Wärmeverteilung.

Der Erfindung liegt die Aufgabe zugrunde, eine platzsparende Heizung für die eingangs genannte Kabine zu schaffen, die einfach für eine gleichmäßige Wärmeverteilung innerhalb des Kabinenraums sorgt.

Diese Aufgabe wird erfindungsgemäß durch eine Kabine mit einer in mindestens einer Seitenwand integrierten Flächenheizung gelöst, die großflächig in der Seitenwand eingebaut ist und sich zwischen einer Innen- und einer Außenwandschicht in Raumluftkanal befindet, der unten eine Eintritts- und oben eine Austrittsöffnung besitzt, wobei die Innenwandschicht aus Holz besteht, über das Strahlung der Flächenheizung in die Kabine strahlt, und die Flächenheizung rückseitig zur Außenwandschicht durch eine Reflektionsschicht ergänzt ist.

Diese Flächenheizung ist nicht mehr mit einem punktuell wirkenden herkömmlichen oder verflachten Saunaofen vergleichbar. Die Flächenheizung gibt großflächig Wärme über Konvektion und/oder Strahlung an den Kabineninnenraum ab, wobei der Anteil an Konvektion und Strahlung je nach Einbauort der Flächenheizung, bzw. nach Gestaltung des Kabineninnenraums variiert werden kann.

Die großflächige Wirkung der Flächenheizung ist für den Benutzer sehr angenehm. Die bislang übliche punktuelle Erwärmung der Kabine entfällt und wird ersetzt durch eine großflächige, gleichmäßige und weniger heiße Erwärmung der Kabineninnenwände, die je nach Anbringung der Flächenheizung innerhalb der Kabinenseitenwände für eine harmonische Wärmeabgabe im Kabinenraum sorgt. Die Konvektion in der Umgebung der Flächenheizung kann geplant zur gleichmäßigen - und nicht wie bisher punktuellen - Umwälzung der Kabinenluft dienen.

Besonders vorteilhaft ist die erfindungsgemäße Ausgestaltung der Innenwandschicht aus Holz. Sie wird relativ rasch und großflächig von innen erwärmt, wobei man mit relativ niedrigen Oberflächentemperaturen der Heizelemente auskommt. Die Erwärmung erfolgt zunächst direkt oder indirekt über die von der Reflektionsschicht in den Kabineninnenraum reflektierte Strahlung. Dabei ist der hohe Emissionsgrad der strahlenden Holzoberfläche besonders günstig. Der Kabineninnenraum wird damit allseitig durch Strahlung, im wesentlichen unabhängig von Konvektionsströmungen, erwärmt. Dies sorgt für eine gleichmäßige Erwärmung, die als besonders angenehm empfunden wird. Dabei behält die innere Holzoberfläche eine akzeptable Temperatur, so daß man sich beim Berühren des warmen Holzes nicht verbrennt. Zusätzlich zu diesem Strahlungsanteil kann auch die Konvektion herangezogen werden, um Wärme in den Innenraum der Kabine zu transportieren und eine gezielte Luftumwälzung zu erreichen.

Während bei herkömmlichen verflachten und in die Seitenwand integrierten Heizöfen oder Heizspiralen eine örtlich konzentrierte Energiezufuhr erfolgte, ist diese erfindungsgemäß auf eine große Fläche verteilt.

Gleichzeitig kann Frischluft mit Raumluft vermischt werden, um den Kabineninnenraum mit Frischluft anzureichern.

In Hinblick auf die gewünschte Großflächigkeit der Flächenheizung ist es von Vorteil, wenn sich der Raum- und/oder Frischluftkanal im wesentlichen über die gesamte Höhe der Wand, beziehungsweise der Kabine erstreckt. Das gleiche gilt auch für die Flächenheizelemente selbst, da durch die großflächige Anordnung derselben die Heizleistung pro Fläche vermindert werden kann.

Die erfindungsgemäße Kabine verfügt über einen Raumluftkanal. Zusätzlich zu diesem kann die Seitenwand einen Frischluftkanal besitzen, der vornehmlich parallel zum Raumluftkanal verläuft und dazu dient, die Raumluft mit Frischluft anzureichern. Bei einer vorteilhaften Weiterbildung der Erfindung trennt die Reflektionsschicht den Raumluft- vom Frischluftkanal. Hierdurch werden mehrere Vorteile gleichzeitig erreicht. Zunächst kann die Reflektionsschicht näher an die Innenwandschicht beziehungsweise die Flächenheizung heranrücken, wodurch der Reflektionsweg der Strahlung zur Holzinnenwandschicht hin kleiner wird.

Die Reflektionsschicht reflektiert einen Großteil der Strahlungswärme der Flächenheizung durch die Holzinnenwandschicht in den Kabineninnenraum. Ein geringer Teil tritt nach rückwärts in Richtung Außenwandschicht aus. Diese wird wieder in den Kabineninnenraum zurücktransportiert und zwar durch die an der Rückseite der Reflektionsschicht vorbeistreichende Frischluft, so daß der Verlust an Strahlungswärme durch diese Anordnung minimiert wird.

Raum- und Frischluftkanal münden bei einer vorteilhaften Weiterbildung der Erfindung im Inneren der Wand und zwar vornehmlich im oberen Bereich derselben. Je nachdem wie schnell die Frischluft auf die Raumlufttemperatur gebracht werden soll, kann dieser Mischraum größer oder kleiner gestaltet werden. Er kann sich auch im wesentlichen über die gesamte Höhe erstrecken, wenn bereits eine sehr frühzeitige Vermischung von Raum- und Frischluft angestrebt wird. Beide Luftkanäle können vorteilhafterweise über eine gemeinsame Austrittsöffnung an der Innenwandschicht münden und zwar bevorzugt im oberen Bereich derselben.

Um die Flächenheizung, also die verschiedenen Heizelemente, die Elektroversorgung, die Steuerung usw. zugänglich zu machen, ist es günstig, wenn die Innenwandschicht abnehmbar ist. Damit sind diese Teile, beziehungsweise die Kanäle nicht nur für die Montage, Reparatur, sondern auch für die Reinigung zugänglich.

Will man die Konvektion der Flächenheizung verhindern, so können die Heizelemente mit zusätzlichen Wärmeleitflächen versehen werden, die vorzugsweise aus Aluminium bestehen.

Will man dagegen die Strahlung der Flächenheizung vergrößern, so können im Raumluftkanal Staustege vorgesehen werden, die als Luftströmungsbarrieren dienen. Sie unterbinden weitgehend den Luftstrom innerhalb der Raumluftkanäle und schotten dieselben luftdicht ab.

Bei Saunakabinen ist es bereits bekannt, Wandelemente nach dem Modulprinzip zu bauen. Diese Elemente sind vornehmlich gleich hoch, entsprechen jedoch in ihrer Breite dem x-fachen einer Modulgrundgröße. Alle Einheiten sind miteinander beliebig verbindbar, so daß Saunakabinen durch Verwendung von Modulen schnell zusammengestellt werden können.

Bei einer bevorzugten Weiterbildung der Erfindung ist vorgesehen, daß wenigstens ein Teil der Wandelement als Heizwandelemente ausgebildet ist, wobei diese beheizbaren Wandelemente von ihren Abmessungen her identisch sind mit solchen ohne Heizung, so daß auch sie im Modulsystem verwendbar sind.

Dies bringt bei der Erfindung besondere Vorteile, die über die einfache Montage der Kabinen hinausgeht. Nachdem die Heizwandelemente in das gleiche Modul passen wie die nicht beheizbaren Wandelemente, kann eine Kabine nach den Bedürfnissen des Benutzers, beziehungsweise nach den Erfordernissen des vorgegebenen Einbauraumes der Kabine optimiert werden. Dies bedeutet nicht nur, daß dort Heizwandelemente vorgesehen werden können, wo entsprechende Zuleitungen an Energie und Luft vorhanden sind, sondern auch dort, wo zur Optimierung der Wärme- und Luftverteilung Heizwandelemente nötig sind, beziehungsweise nicht beheizbare Wandelemente zum Einsatz kommen sollten.

Insofern hat das Modulsystem bei der Erfindung zwei Funktionen, wobei die der Optimierung des Wärme- und Luftzuflusses noch höher einzuschätzen ist, als diejenige des vereinfachten Aufbaus, Montage und Reparatur.

Um innerhalb einer Kabine eine Art Schraubenströmung zu erzielen ist es günstig, wenn abwechselnd Heizwandelemente und nicht beheizbare Wandelemente nebeneinander angeordnet sind. Dabei ist es vorteilhaft, wenn eine Abluftöffnung an einer der Seitenwände möglichst unten angeordnet ist. Sind die Heizwandelemente an einander gegenüberliegenden Seitenwänden angeordnet und befindet sich die Abluftöffnung an einer dritten Seitenwand, so ergibt sich eine Schraubenströmung, die für eine sehr gleichmäßige Wärme- und Luftverteilung sorgt.

Ein ähnlicher Effekt ergibt sich bei einer Walzen-, beziehungsweise Doppelwalzenströmung. Sie kann erzielt werden, wenn an einander gegenüberliegenden Seitenwänden sich die Heizwandelemente, beziehungsweise die nicht beheizbaren Wandelemente jeweils als gleiches Paar einander gegenüberstehen. Im Bereich des Paars der Heizwandelemente erzwingt die Konvektion die Walzenströmung, sie überträgt sich auch auf ein eventuell benachbartes Paar von nicht beheizten Wandelementen.

Die bei der Erfindung von der Flächenheizung ausgehende Strahlung wird bei den benachbarten nicht beheizten Wandelementen vorzugsweise von einer Reflektionsschicht zurück in den Innenraum reflektiert, die an den nicht beheizbaren Wänden vorteilhafterweise angebracht ist.

Wenn bei der Erfindung von Wänden, beziehungsweise Seitenwänden gesprochen wird, soll dies nicht ausschließen, daß auch der Fußboden, beziehungsweise die Kabinendecke gemeint ist. Auch diese können mit Flächenheizungen, Luftkanälen, Reflektionsschichten usw. bestückt sein, um der Aufgabe der Erfindung zu genügen.

Ausführungsbeispiele der Erfindung sind nachstehend beschrieben.

Es zeigen:
- Fig.1: einen Vertikalschnitt durch ein erfindungsgemäßes Heizwandelement,
- Fig.2: eine Draufsicht auf das Heizwandelement von Figur 1 bei abgenommener Innenwandschicht,
- Fig.3: einen Horizontalschnitt durch das Heizwandelement von Figur 1 gemäß Linie III-III,

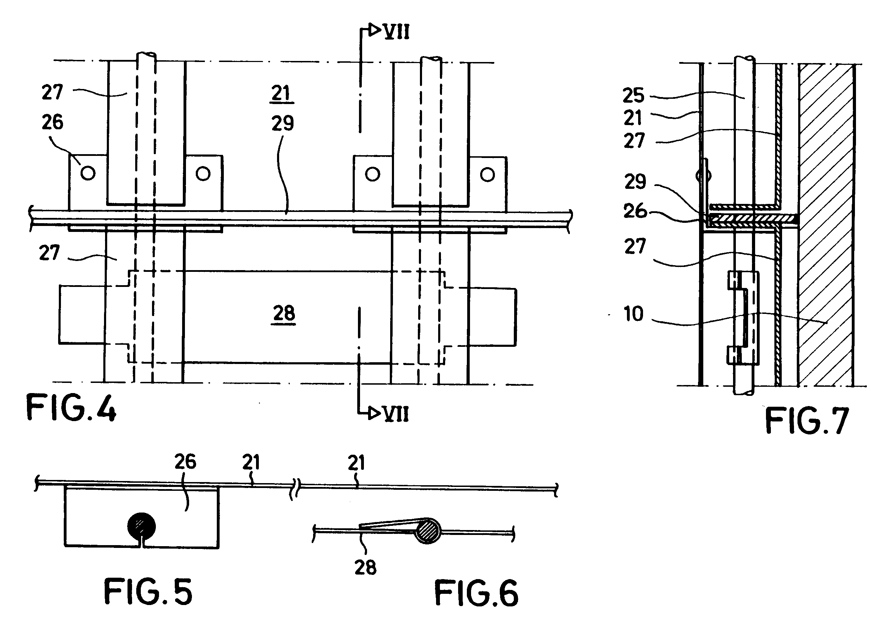

- Fig.4: eine Vorderansicht auf eine mit Staustegen und Wärmeleitblechen versehene Flächenheizung,
- Fig.5: einen Horizontalschnitt durch die Flächenheizung im Bereich der Halterung,
- Fig.6: einen Horizontalschnitt durch die Flächenheizung im Bereich der Wärmeleitbleche,
- Fig.7: einen Vertikalschnitt durch die Anordnung von Figur 4 gemäß Linie VII-VII,
- Fig.8: einen Horizontalschnitt durch eine Kabine mit einer Schraubenströmung,
- Fig.9: einen Vertikalschnitt durch die Kabine von Figur 8,
- Fig.10: einen Horizontalschnitt durch eine Kabine mit Walzenströmung,
- Fig.11: einen Vertikalschnitt durch die Kabine von Figur 10.

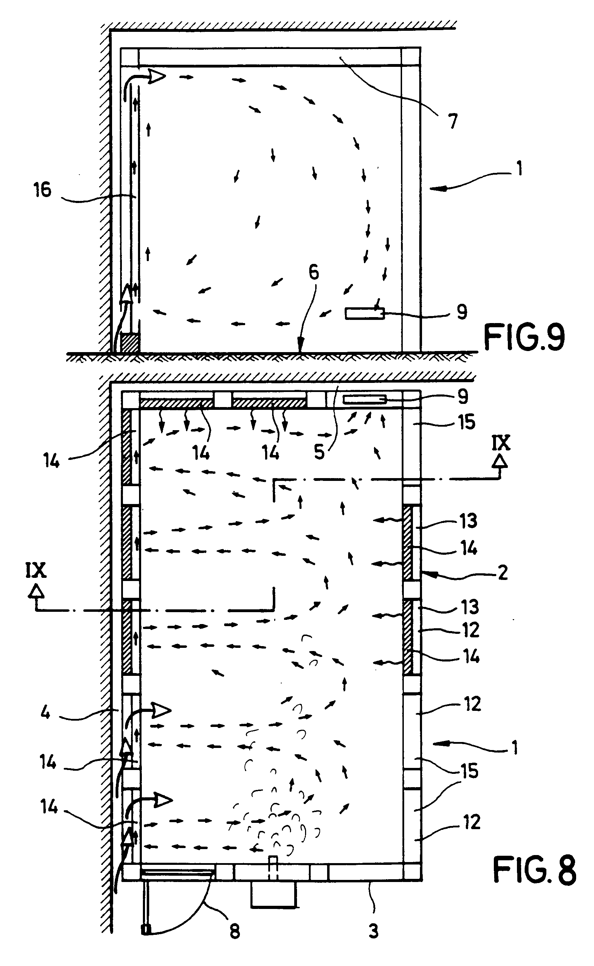

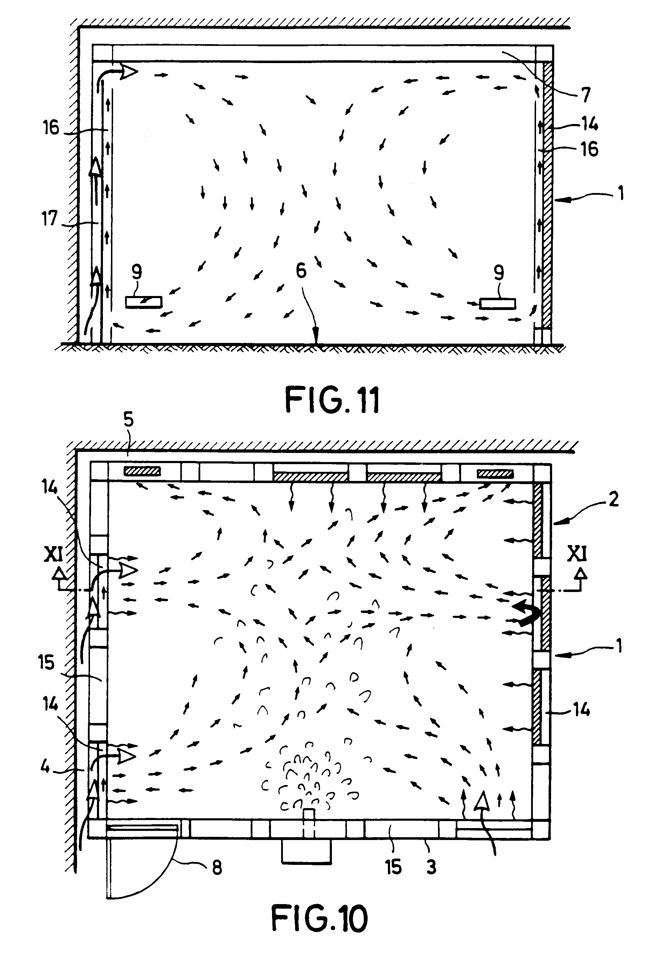

Die Erfindung bezieht sich auf Kabinen 1, wie sie beispielsweise in den Figuren 8 und 10 als Horizontalschnitt, beziehungsweise 9 und 11 als Vertikalschnitt dargestellt sind.

Sie dienen zum Saunen, Dampfbaden, Inhalieren usw. und verfügen zumeist über einen rechteckigen Grundriß. Sie besitzen vertikale Seitenwände 2, 3, 4 und 5, sowie einen Boden 6 und eine Decke 7. An einer Seitenwand 3 ist eine Türe 8 zum Betreten des Kabineninnenraums vorhanden. An einer oder an mehreren Stellen der Seitenwand befindet sich vornehmlich im unteren Bereich eine oder mehrere Abluftöffnungen 9.

Kabinen dieser Art gibt es in mannigfaltigen Abwandlungen, da die Kabinen zumeist auf die zur Verfügung gestellten Einbauräume zugeschnitten werden müssen. Der Grundriß muß deshalb nicht unbedingt rechteckig, die Seitenwände nicht unbedingt parallel zueinander beziehungsweise vertikal sein. Es sind deshalb beliebige Mischformen bei Größe und Gestalt des Kabinenraumes denkbar.

Jede Kabinenwand verfügt über eine Innenwandschicht 10 und eine Außenwandschicht 11, die die jeweiligen Oberflächenbegrenzungsflächen der Seitenwand bilden. Jede Innenwandschicht ist dem Rauminneren zugewandt, jede Außenwandschicht dem Äußeren der Kabine.

Bei der Erfindung sind die Wände vornehmlich in Wandelemente 12 unterteilt, die sich modulartig zu den jeweiligen Kabinenwänden zusammenstellen lassen. Die Abmessungen dieser Module ist jeweils identisch, beziehungsweise sie entsprechen in einer Dimension dem x-fachen einer Grundabmessung, so daß die Wandelemente sich beliebig zu einer Kabine zusammenfügen lassen.

Bei der Erfindung sind Seitenwandbereiche vorgesehen, die mit einer Flächenheizung 13 bestückt sind. Wird die Modultechnik beim Aufbau der Seitenwände verwendet, so gibt es demzufolge Heizwandelemente 14, die diese Flächenheizung aufweisen und solche nicht beheizbaren Wandelemente 15, die ohne Flächenheizung sind.

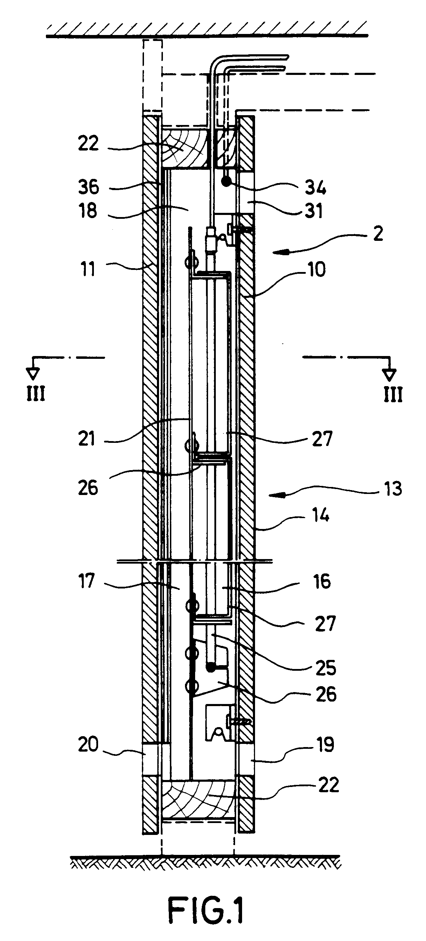

In Figur 1 ist ein Heizwandelement 14 gezeigt, das in Modulbauweise gestaltet ist. Der prinzipielle Aufbau ist jedoch der gleiche, wenn die Modultechnik nicht verwendet wird, weshalb die nachfolgende Beschreibung generell gilt.

Zwischen der Innenwandschicht 10 und der Außenwandschicht 11 ist ein Zwischenraum vorhanden, der im vorliegenden Fall einen Raumluftkanal 16, einen Frischluftkanal 17 und einen Mischraum 18 aufweist.

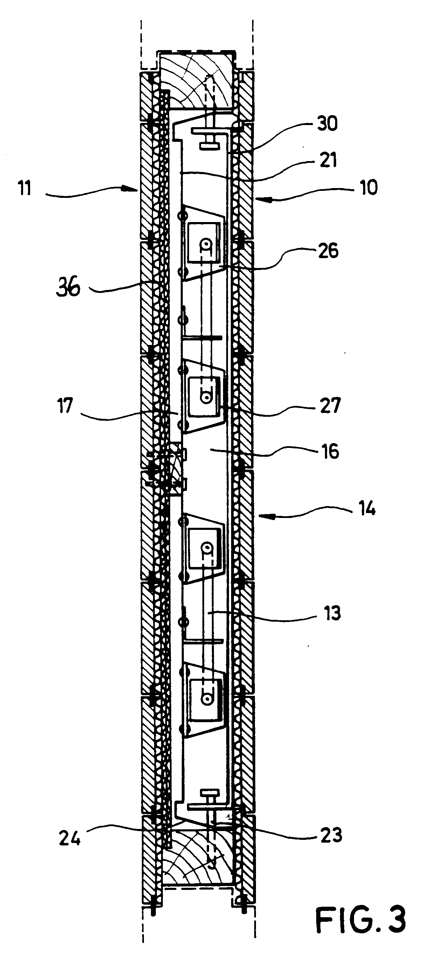

Der Raumluftkanal verfügt im unteren Bereich des Wandelements über eine Eintrittsöffnung 19, die sich an der Innenwandschicht 10 befindet. Der Frischluftkanal weist etwa in der gleichen Höhe, jedoch an der Außenwandschicht 11 eine Eintrittsöffnung 20 auf. Beide Kanäle erstrecken sich fast über die gesamte Höhe des Heizwandelements 14, beziehungsweise der Kabine 1. Das gleiche gilt für die Breite der Kanäle, sie reichen bis an die seitlichen Enden der Wandelemente, wie dies insbesondere aus Figur 3 hervorgeht. Die beiden Kanäle verlaufen parallel zueinander in vertikaler Richtung analog zur Orientierung des gezeigten Heizwandelementes 14. Sollte es jedoch die Einbausituation notwendig machen, das Wandelement schräg im Raum anzuordnen, so spricht hiergegen nichts.

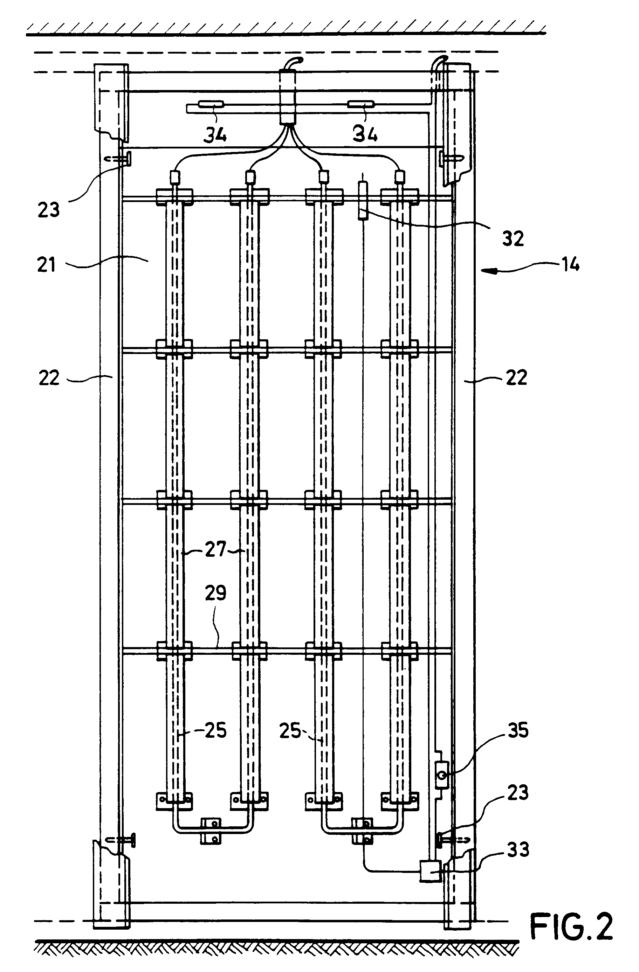

Der Raumluftkanal ist vom Frischluftkanal über eine Reflektionsschicht 21 getrennt, die die Form einer Platte 21 hat und vornehmlich aus Aluminium besteht. Die Figur 2 zeigt, daß diese Platte fast die gesamte Fläche des Wandelements 14 ernimmt. Sie ist innerhalb eines Holzrahmens 22 durch seitliche Befestigungen 23 gehalten, die zugleich eine lösbare Halterung für die vom Kabineninnenraum her abnehmbare Innenwandschicht 10 bilden.

Die Reflektionsschicht dient dazu, die von der Flächenheizung 13 abgegebene Strahlung in den Kabineninnenraum zu reflektieren. Sie erwärmt sich infolgedessen, weshalb sie bei ihrer seitlichen Befestigung über elastische Endschenkel 24 mit den Befestigungen 23 verbunden ist.

In der Mitte des Wandelements 14 ist sie zusätzlich an der Außenwandschicht 11 befestigt.

Die Reflektionsschicht 21 ist selbsttragend ausgebildet und dient als Träger für die Flächenheizung 13, die im vorliegenden Fall pro Wandelement aus wenigstens einem U-förmigen Rohrheizkörper 25 besteht. Diese sind elektrisch beheizbar. Die Rohrheizkörper eines Wandelementes, beziehungsweise mehrerer Wandelemente können parallel zueinander geschaltet werden, um zugleich die Wärmeabgabe über Strahlung und Konvektion zu erzielen. Legt man dagegen mehr Wert auf reine Wandstrahlung, so werden die Rohrheizkörper hintereinander geschaltet.

Die Rohrheizkörper sind über winkelförmige Halterungen 26 lösbar an der Reflektionsschicht 21 angebracht. Die Lösbarkeit wird einfach dadurch erreicht, daß diese Winkel auf ihrem horizontalen Schenkel in Richtung auf die Kabineninnenwand hin einen Schlitz aufweisen, der zum Lösen der Rohrheizelemente aufgebogen werden kann.

Um die direkte Strahlung der Rohrheizelemente in Richtung auf die Innenwandschicht 10 zu vermindern, beziehungsweise zu verhindern, können die Rohrheizelemente mit streifenförmigen Schirmen 27 versehen sein, die gleichfalls lösbar an den Rohrheizkörpern 25 angeordnet sind. Sie verhindern das Verbrennen der benachbarten Abschnitte der Innenwandschicht 10 im unmittelbaren Bereich der Rohrheizkörper.

Die Schirme 27 bestehen vornehmlich aus Alu und verfügen in der Seitenansicht über eine U-Form, wobei die jeweiligen U-Schenkel die Verbindung zu den Rohrheizkörpern 25 schaffen. Die Lösbarkeit der Schenkel wird ähnlich wie bei den Halterungen 26 über Schlitze besorgt, die zur Durchdringungsöffnung der Rohrheizkörper führen.

Bei der Auslegung der Kabine kann man den Ort und die Art der Wärmeabgabe mit Rücksicht auf die Grundrißform, die Anordnung der Möbel, der Tür, der Fenster, der Abluftöffnung usw. vorbestimmen.

Das Maß der Strahlung und/oder Konvektion kann gezielt verändert werden, um die gewünschte Optimierung zu erreichen. Die Konvektion wird zum Beispiel durch die Verwendung von Wärmeleitblechen aus Aluminium 28 verbessert, die eine hohe Leitfähigkeit aufweisen, jedoch nur eine kleine Wärmeabgabe durch Strahlung haben. Die Wärmeleitbleche 28 können durch seitliche Schenkel am Rohrheizkörper befestigt werden, wobei die Schenkel um die Rohrheizkörper herumgebogen sind.

Die Oberfläche des Rohrheizkörpers 25 kann durch ein Leitblech mindestens verdoppelt werden.

Will man dagegen die Strahlung verstärken, so können Staustege 29 zum Einsatz kommen. Mit derartigen Stegen wird der Raumluftkanal in mehrere, übereinander angeordnete, im wesentlichen luftdichte Kammern unterteilt, die die Konvektion unterbinden. Zu diesem Zweck sind sie horizontal im Raumluftkanal angeordnet und legen sich dicht zwischen die Reflektionsschicht 21 und die Innenwandschicht 10, wie dies aus Figur 7 hervorgeht.

Figur 3 zeigt, daß die Innenwandschicht 10 aus Holz besteht, zum Beispiel aus Nut- und Federbrettern, die ineinander gesteckt sind und an ihrer Rückseite über einen Bügel 30 gehalten werden. Der Bügel ist seinerseits in den bereits angesprochenen Befestigungen 23 lösbar eingehängt, so daß die Innenwandschicht 10 zum Kabineninnenraum hin abgenommen werden kann.

Im oberen Bereich des Heizwandelementes 14 befindet sich der Mischraum 18, in dem sich der Raumluftkanal 16 und der Frischluftkanal 17 treffen. Je nachdem wie schnell die Frischluft auf Raumlufttemperatur gebracht werden soll, kann dieser Mischraum größer oder kleiner gestaltet werden mit der Folge, daß die Reflektionsschicht 21 höher oder niedriger ausfällt.

Beide Kanäle haben eine gemeinsame Austrittsöffnung 31, die die Luft durch die Innenwandschicht 10 in das Kabineninnere führt.

Die erfindungsgemäße Flächenheizung 13 wird vornehmlich durch zwei Temperaturfühler geregelt. Ein Grenztemperaturfühler 32 ist neben einer Übertemperaturschmelzsicherung 34 in jedem Heizwandelement 14 eingebaut und steuert über einen Betriebartentemperaturregler 33 den Heizstrom. Der Grenztemperaturfühler 32 wird in Deckennähe angeordnet und kann Wärme und Strahlung messen. Ein Beispiel hierfür ist das Globusthermometer. In einem Steuergerät, das den Temperaturregler enthält, wird je nach Betriebsart die Soll-Temperatur eingestellt.

Im gleichen Stromkreis mit den erwähnten Temperaturfühlern und der Schmelzsicherung kann ein Sicherungsschalter 35 vorhanden sein, um bei Abnahme der Innenwandschicht 10 die Stromzufuhr zu unterbrechen.

Die Außenwandschicht 11 besitzt an ihrer Innenseite eine Isolationsschicht 36, die sich zum Beispiel aus mehreren Kartonschichten zusammensetzt, die an ihrer Oberfläche mit einer Alufolie belegt ist.

Die erfindungsgemäße Flächenheizung dient dazu, den normalen Saunaofen, der punktuell sein Wärme abgibt, durch eine großflächige Heizanordnung zu ersetzen, die in den Seitenwänden der Kabine integriert ist. Die Seitenwände werden zu diesem Zweck als Strahlungswände ausgebaut und zwar geschieht dies dadurch, daß die Rohrheizkörper 25 direkt, beziehungsweise indirekt die aus Holz bestehene Innenwandschicht 10 bestrahlen. Die Schirme 27 verhindern im unmittelbaren Bereich der Rohrheizkörper eine Überhitzung, beziehungsweise Verbrennen des Holzes. Die von den Rohrheizkörper ausgehende Strahlung wird einerseits von den Schirmen nach rückwärts und andererseits von der Reflektionsschicht 21 nach vorwärts in Richtung auf den Kabineninnenraum geleitet. Dadurch ergibt sich eine hohe Emission der Holzoberfläche, trotzdem kann man sich beim Berühren des warmen, beziehungsweise heißen Holzes nicht verbrennen.

Zusätzlich zur Strahlung der Flächenheizung tritt die Konvektion. Sie wird zunächst dadurch bewirkt, daß die Flächenheizung sich im Raumluftkanal 16 befindet, wodurch unten über die Eintrittsöffnung 19 Kabinenluft angesaugt wird und innerhalb des Kanales nach oben steigt. Durch die Frischluftöffnung 20 wird von außen Frischluft angesaugt, sie steigt gleichfalls empor und transportiert die von der Reflektionswand nach rückwärts abgestrahlte Verlustwärme nach oben in den Mischraum 18, wo sich die Frisch- und die Umluft mischen, um gemeinsam durch die Austrittsöffnung 31 in das Kabineninnere zu gelangen.

Die Figuren 8 bis 11 zeigen einige mögliche Ausführungsbeispiele für erfindungsgemäße Kabinen, die nach dem Modulsystem aufgebaut sind. Bei der Kabine gemäß Figur 8 befinden sich auf den beiden Längsseiten 2 und 4 mehrere Heizwandelemente 14, sowie einige nicht beheizbare Wandelemente 15. Die Abluftöffnung 9 befindet sich an der kürzeren Rechteckseite 5. Insgesamt fünf der Heizwandelemente 14 sind so eingestellt, daß sie neben der Strahlung auch noch Konvektion bewirken. Dies ist durch Luftpfeile zu erkennen.

Zwei Heizwandelemente 14, die sich an der Seitenwand 2 befinden, sind jedoch durch Staustege so modifiziert, daß sie lediglich Strahlung abgeben, dort entsteht keine Konvektion.

Es ergibt sich eine schraubenähnliche Strömung, die von der Seitenwand 3 zur Abluftöffnung 9 der Seitenwand 5 gerichtet ist.

Die Figur 9 zeigt das Hereinströmen von Frisch- und Raumluft über ein Heizwandelement 14 im deckennahen Bereich der Kabine.

Es können Heizwandelemente zusätzlich eingebaut oder entfernt werden. Eine weitere Modifikation ist durch die Verwendung der Wärmeleitbleche 28 geschaffen, da hierdurch die Konvektion begünstigt wird. Staustege dagegen verhindern die Konvektion und dienen dazu, bei Heizwandelementen 14 lediglich die Strahlung zuzulassen.

Die nicht beheizbaren Wandelemente 15 können mit Reflektionsschichten versehen werden, um die aus dem Rauminneren aufgenommene Strahlung in den Innenraum zu reflektieren.

Die Kabinen gemäß den Figuren 10 und 11 sind so ausgerichtet, daß sich in etwa eine Doppelwalzenströmung einstellt. Hier gilt das gleiche, wie zuvor in Zusammenhang mit den Figuren 8 und 9 gesagt. Je nach Anordnung der Heizwandelemente 14 beziehungsweise der nicht beheizbaren Wandelemente 15 kann die Strömung beeinflußt werden. Es gelten die gleichen Modifikationen bei den Heizwandelementen. Die Figuren 9 und 11 zeigen, daß die Raumluftkanäle 16 raumhoch gestaltet sind. Sie entwickeln eine beachtliche Kaminwirkung, und können infolgedessen als thermische Ventilatoren angesprochen werden.

Die nicht beheizbaren Wände 15 können den gleichen Aufbau aufweisen wie die Heizwandelemente 14, wobei lediglich einige Teile fehlen. So ist die Flächenheizung entbehrlich, ebenso die Raumluftkanäle mit ihren Öffnungen. Lediglich die Reflektionsschicht 21 und gegebenenfalls eine Isolierschicht 36 sind erwünscht. Die Eintritts- und Austrittssöffnungen können entfallen.

## Patentansprüche

1. Kabine (1) mit einer in mindestens einer Seitenwand (2, 3, 4, 5) integrierten Flächenheizung (13), die großflächig in der Seitenwand (2, 3, 4, 5) eingebaut ist und sich zwischen einer Innen- und einer Außenwandschicht (10, 11) in einem Raumluftkanal (16) befindet, der unten eine Eintritts- und oben eine Austrittsöffnung (19, 31) besitzt, wobei die Innenwandschicht (10) aus Holz besteht, über das Strahlung der Flächenheizung (13) in die Kabine (1) strahlt, und die Flächenheizung (13) rückseitig zur Außenwandschicht (11) durch eine Reflektionsschicht (21) ergänzt ist.

2. Kabine nach Anspruch 1,
**dadurch gekennzeichnet,**
daß die Seitenwand (2, 3, 4, 5) einen Frischluftkanal (17) aufweist.

3. Kabine nach Anspruch 2,
**dadurch gekennzeichnet,**
daß parallel zum Raumluftkanal (16) der Frischluftkanal (17) verläuft.

4. Kabine nach einem der Ansprüche 2 oder 3,
**dadurch gekennzeichnet,**
daß die Reflektionsschicht (21) den Raumluft- (16) vom Frischluftkanal (17) trennt.

5. Kabine nach einem der Ansprüche 2 bis 4,
**dadurch gekennzeichnet,**
daß der Frischluftkanal (17) an der Außenschicht (11) eine Eintrittsöffnung (20) besitzt.

6. Kabine nach einem der Anspruch 5,
**dadurch gekennzeichnet,**
daß die Eintrittsöffnung (20) des Frischluftkanals (17) im unteren Bereich der Außenwandschicht (11) angeordnet ist.

7. Kabine nach einem der vorhergehenden Ansprüche,
**dadurch gekennzeichnet,**
daß die Eintrittsöffnung (19) des Raumluftkanals (16) sich im unteren Bereich der Innenwandschicht (10) befindet.

8. Kabine nach einem der Ansprüche 2 bis 7,
**dadurch gekennzeichnet,**
daß Raum- und Frischluftkanal (16, 17) eine gemeinsame Austrittsöffnung (31) an der Innenwandschicht (10) haben.

9. Kabine nach Anspruch 8,
**dadurch gekennzeichnet,**
daß die gemeinsame Austrittsöffnung (31) sich nach oben an der Innenwandschicht (10) befindet.

10. Kabine nach einem der Ansprüche 2 bis 9,
**dadurch gekennzeichnet,**
daß der Raum- und/oder Frischluftkanal (16, 17) sich im wesentlichen über die gesamte Höhe der Wand, beziehungsweise der Kabine (1) erstreckt.

11. Kabine nach einem der Ansprüche 2 bis 7,
**dadurch gekennzeichnet,**
daß Raum- und Frischluftkanal (16, 17) im Inneren der Wand in einem Mischraum (18) münden.

12. Kabine nach einem der vorhergehenden Ansprüche,
**dadurch gekennzeichnet,**
daß die Innenwandschicht (10) abnehmbar ist.

13. Kabine nach einem der vorhergehenden Ansprüche,
**dadurch gekennzeichnet,**
daß die Außenwandschicht (11) an ihrer Innenseite eine Isolationsschicht (36) aufweist.

14. Kabine nach Anspruch 13,
**dadurch gekennzeichnet,**
daß die Isolationsschicht (36) aus einer oder mehreren Wellkartonschichten besteht, die vorzugsweise an der Innenseite mit Alufolie überzogen sind.

15. Kabine nach einem der vorhergehenden Ansprüche,
**dadurch gekennzeichnet,**
daß die Flächenheizung (13) von einem oder mehreren Rohrheizkörpern (25) gebildet wird, die durch Konvektion und/oder Strahlung zum Beheizen des Kabineninnenraumes dienen.

16. Kabine nach einem der vorhergehenden Ansprüche,
**dadurch gekennzeichnet,**
daß zur Vergrößerung der Konvektion die Flächenheizung (13) mit zusätzlichen Wärmeleitblechen (28) versehen wird, die vorzugsweise aus Aluminium bestehen.

17. Kabine nach einem der vorhergehenden Ansprüche,
**dadurch gekennzeichnet,**
daß zur Stärkung der Strahlungsabgabe der Flächenheizung (13) im Raumluftkanal Staustege (29) vorgesehen sind, die den Raumluftkanal (16) zur Vermeidung von Konvektion in abgeschottete Kammern unterteilen.

18. Kabine nach einem der vorhergehenden Ansprüche,
**dadurch gekennzeichnet**,
daß sie modulartig unter Verwendung gleichflächiger nicht beheizbarer Wandelemente zusammengesetzt ist, und wenigstens ein Teil der Wandelemente (2, 3, 4, 5) als Heizwandelemente (14) ausgebildet ist, wobei diese beheizbaren Wandelemente (14) von ihren Abmessungen her identisch sind mit solchen ohne Heizung.

19. Kabine mit einer Vielzahl von in ihren Abmessungen identischen Wandelementen nach Anspruch 18,
**dadurch gekennzeichnet,**
daß abwechselnd Heizwandelemente (14) und nicht beheizbare Wandelemente (15) nebeneinander angeordnet sind.

20. Kabine mit parallel gegenüberliegenden Seitenwänden nach Anspruch 18 oder 19,
**dadurch gekennzeichnet,**
daß die Wandelemente der Seitenwände (2, 3, 4, 5) derart angeordnet sind, daß sich jeweils Heizwandelemente (14), beziehungsweise nicht beheizbare Wandelemente (15) einander gegenüberstehen.

21. Kabine nach einem der Ansprüche 18 oder 19,
**dadurch gekennzeichnet,**
daß die Heizwandelemente (14) an den längeren Rechteckseiten und die Abluftöffnung (9) an einer der kürzeren Rechteckseiten angeordnet sind.

22. Kabine nach einem der vorhergehenden Ansprüche,
**dadurch gekennzeichnet,**
daß die nicht beheizbaren Wände (15) mit einer Reflektionsschicht (21) versehen sind.

23. Kabine nach einem der vorhergehenden Ansprüche,
**dadurch gekennzeichnet,**
daß die Flächenheizung (13) zwei Temperaturfühler (32, 33) aufweist.

24. Kabine nach Anspruch 23,
**dadurch gekennzeichnet,**
daß einer der beiden Temperaturfühler (32) ein Grenztemperaturfühler ist, der in wenigstens einem Wandelement (12), vornehmlich in einem Heizwandelement (14) angeordnet ist.

25. Kabine nach einem der vorhergehenden Ansprüche,
**dadurch gekennzeichnet,**
daß die Flächenheizung (13) einen Betriebsartentemperaturfühler (33) aufweist, der vornehmlich einmal innerhalb der Kabine angeordnet ist.

26. Kabine nach Anspruch 23,
**dadurch gekennzeichnet,**
daß die beiden Temperaturfühler (32, 33) eine Zweipunktregelung besitzen.

27. Kabine nach einem der vorhergehenden Ansprüche,
**dadurch gekennzeichnet,**
daß die Flächenheizung (13) eine Übertemperaturschmelzsicherung (34) ausweist, die vornehmlich oberhalb der Rohrheizkörper (25) angeordnet ist.

28. Kabine nach einem der vorhergehenden Ansprüche,
**dadurch gekennzeichnet,**
daß ein Rohrheizkörper (25) der Flächenheizung (13) lösbar innerhalb der Wandelemente (12), zum Beispiel durch aufspreizbare Halterung (26), gehalten ist.

## Claims

1. A cabin (1) comprising a radiant heating system (13) integrated into at least one side wall (2, 3, 4, 5), which is installed over a large surface in said side wall (2, 3, 4, 5) and positioned between an inner wall layer and an outer wall layer (10, 11) in an ambient air channel (16) having an inlet opening at the bottom and an outlet opening at the top (19, 31), said inner wall layer (10) being made from wood via which the radiation from said radiant heating system (13) radiates into said cabin (1), and said radiant heating system (13) being supplemented at its rear side relative to said outer wall layer (11) by a reflecting layer (21).

2. The cabin according to claim 1,
**characterized in**
that said side wall (2, 3, 4, 5) comprises a fresh air channel (17).

3. The cabin according to claim 2,
**characterized in**
that said fresh air channel (17) extends in parallel with said ambient air channel (16).

4. The cabin according to any of claims 2 or 3,
**characterized in**
that said reflecting layer (31) separates said ambient air channel (16) from said fresh air channel (17).

5. The cabin according to any of claims 2 to 4,
**characterized in**
that said fresh air channel (17) has an inlet opening (20) on said outer layer (11).

6. The cabin according to claim to 5,
**characterized in**
that said inlet opening (20) of said fresh air channel (17) is disposed in the lower portion of said outer wall layer (11).

7. The cabin according to any of the preceding claims,
**characterized in**
that said inlet opening (19) of said ambient air channel (16) is positioned in the lower portion of said inner wall layer (10).

8. The cabin according to any of claims 2 to 7,
**characterized in**
that said ambient air channel and said fresh air channel (16, 17) have a joint outlet opening (31) on said inner wall layer (10).

9. The cabin according to claim 8,
**characterized in**
that said joint outlet opening (31) is positioned upwardly on said inner wall layer (10).

10. The cabin according to any of claims 2 to 9,
**characterized in**
that said ambient air channel and/or said fresh air channel (16, 17) extend substantially over the whole height of said wall and said cabin (1), respectively.

11. The cabin according to any of claims 2 to 7,
**characterized in**
that said ambient air channel and said fresh air channel (16, 17) in the interior of said wall run into a mixing chamber (18).

12. The cabin according to any of the preceding claims,
**characterized in**
that said inner wall layer (10) is removable.

13. The cabin according to any of the preceding claims,
**characterized in**
that said outer wall layer (11) comprises an insulating layer (36) on its inside.

14. The cabin according to claim 13,
**characterized in**
that said insulating layer (36) consists of one or a plurality of corrugated cardboard layers which are preferably coated on the inside with an aluminum foil.

15. The cabin according to any one of the preceding claims,
**characterized in**
that said radiant heating system (13) is formed by one or a plurality of tubular heating elements (25) which serve to heat the interior of said cabin by convection and/or radiation.

16. The cabin according to any of the preceding claims,
**characterized in**
that said radiant heating system (13) is provided with additional heat guiding plates (28), made preferably from aluminum, for intensifying the convection.

17. The cabin according to any of the preceding claims,
**characterized in**
that accumulating webs (29) which subdivide said ambient air channel (16) into shielded chambers so as to avoid convection are provided in said ambient air channel for intensifying the radiation emitted from said radiant heating system (13).

18. The cabin according to any of the preceding claims,
**characterized in**
that it is composed in modular fashion using non-heatable wall elements of the same size, and that said wall elements (2, 3, 4, 5) are at least formed in part as heating wall elements (14), said heatable wall elements (15) being dimensionally identical with those without any heating.

19. The cabin comprising a plurality of dimensionally identical wall elements according to claim 18,
**characterized in**
that said heating wall elements (14) and non-heatable wall elements (15) are alternately arranged side by side.

20. The cabin comprising side walls which are opposite and in parallel, according to claim 18 or 19,
**characterized in**
that said wall elements of said side walls (2, 3, 4, 5) are arranged such that heating wall elements (14) and non-heatable wall elements (15), respectively, are opposite to one another.

21. The cabin according to any of claims 18 or 19,
**characterized in**
that said heating wall elements (14) are arranged at the rectangular sides and a vent hole (9) at one of the shorter rectangular sides.

22. The cabin according to any of the preceding claims,
**characterized in**
that said non-heatable walls (15) are provided with a reflecting layer (21).

23. The cabin according to any of the preceding claims,
**characterized in**
that said radiant heating system (13) comprises two temperature sensors (32, 33).

24. The cabin according to claim 23,
**characterized in**
that one of said two temperature sensors (32) is a limit temperature sensor which is arranged in at least one wall element (12), preferably in a heating wall element (14).

25. The cabin according to any of the preceding claims,
**characterized in**
that said radiant heating system (13) has an operating mode temperature sensor (33) which is arranged within said cabin preferably once.

26. The cabin according to claim 23,
**characterized in**
that said two temperature sensors (32, 33) have a two-step control.

27. The cabin according to any of the preceding claims,
**characterized in**
that said radiant heating system (13) has an excess-temperature fuse (34) which is preferably arranged above said tubular heating element (25).

28. The cabin according to any one of the preceding claism,
**characterized in**
that a tubular heating body (25) of said radiant heating system (13) is held detachably within said wall elements (12), for instance by a spreadable mounting (26).

## Revendications

1. Cabine (1) équipée d'un chauffage radiant (13) intégré dans au moins une paroi latérale (2,3,4,5), ce chauffage étant logé sur une grande surface dans la paroi latérale (2,3,4,5) et se trouvant entre une couche de paroi intérieure et une couche de paroi extérieure (10,11), dans un canal d'air ambiant (16), ce canal ayant en partie basse un orifice d'entrée et en partie haute un orifice de sortie (19,31), la couche de paroi intérieure (10) étant réalisée en bois, par l'intermédiaire duquel le rayonnement du chauffage radiant (13) est émis dans la cabine (1) et le chauffage radiant (13) étant complété en face arrière de la couche de paroi extérieure (11) par une couche réfléchissante (21).

2. Cabine selon la revendication 1, caractérisée en ce que la paroi latérale (2,3,4,5) présente un canal d'air frais (17).

3. Cabine selon la revendication 2, caractérisée en ce que le canal d'air frais (17) s'étend parallèlement au canal d'air ambiant (16).

4. Cabine selon l'une des revendications 2 ou 3 caractérisée en ce que la couche réfléchissante (21) assure la séparation entre le canal d'air ambiant (16) et le canal d'air frais (17).

5. Cabine selon l'une des revendications 2 à 4, caractérisée en ce que le canal d'air frais (17) présente sur sa couche de paroi extérieure (11) un orifice d'entrée (20).

6. Cabine selon la revendication 5, caractérisée en ce que l'orifice d'entrée (20) du canal d'air neuf (17) est ménagé dans la zone inférieure de la couche de paroi extérieure (11).

7. Cabine selon l'une des revendications précédentes, caractérisée en ce que l'orifice d'entrée (19) du canal d'air ambiant (16) se trouve dans la zone inférieure de la couche de paroi intérieure (10).

8. Cabine selon l'une des revendications 2 à 7, caractérisée en ce que le canal d'air ambiant et le canal d'air frais (16, 17) ont un orifice de sortie (31) commun ménagé sur la couche de paroi intérieure (10).

9. Cabine selon la revendication 8, caractérisée en ce que l'orifice de sortie (31) commun se trouve vers le haut sur la couche de paroi intérieure (10).

10. Cabine selon l'une des revendications 2 à 9, caractérisée en ce que les canaux d'air ambiant et/ou d'air frais (16, 17) s'étendent sensiblement sur toute la hauteur de la paroi, le cas échéant, de la cabine (1).

11. Cabine selon l'une des revendications 2 à 7, caractérisée en ce que les canaux d'air ambiant et/ou d'air frais (16, 17) débouchent à l'intérieur de la paroi, dans une chambre de mélange (18).

12. Cabine selon l'une des revendications précédentes, caractérisée en ce que la couche de paroi intérieure (10) est amovible.

13. Cabine selon l'une des revendications précédentes, caractérisée en ce que la couche de paroi extérieure (11) présente sur sa face intérieure une couche d'isolation (36).

14. Cabine selon la revendication 13, caractérisée en ce que la couche d'isolation (36) est constituée d'une ou plusieurs couches de carton ondulé, revêtues de préférence d'une feuille d'aluminium en face intérieure.

15. Cabine selon l'une des revendications précédentes, caractérisée en ce que le chauffage radiant (13) est constitué par un ou plusieurs corps tubulaires (25), servant à chauffer l'espace intérieur de la cabine, par convection et/ou par rayonnement.

16. Cabine selon l'une des revendications précédentes, caractérisée en ce que, pour augmenter la convection, le chauffage radiant (13) est pourvu de plaques de métal conductrices de chaleur (28) additionnelles, constituées de préférence d'aluminium.

17. Cabine selon l'une des revendications précédentes, caractérisée en ce que, pour amplifier l'évacuation du rayonnement du chauffage radiant (13), on prévoit, dans le canal d'air ambiant, des traverses de séparation (29) qui subdivisent le canal d'air ambiant (16) en vue d'éviter toute convection dans les chambres cloisonnées.

18. Cabine selon l'une des revendications précédentes, caractérisée par le fait qu'elle est constituée de façon modulaire avec utilisation d'éléments de paroi non chauffables, de même surface, et au moins une partie des éléments de paroi (2, 3, 4, 5) étant réalisée sous forme d'éléments de paroi chauffants (14), ces éléments de paroi chauffants (14) ayant des dimensions identiques à ceux qui n'ont pas de chauffage.

19. Cabine comportant une pluralité d'éléments de paroi à dimensions identiques, selon la revendication 18, caractérisée en ce que, en alternance, des éléments de paroi chauffables (14) et des éléments de paroi non chauffables (15) sont disposés les uns à côté des autres.

20. Cabine comportant des parois latérales opposées et parallèles selon la revendication 18 ou 19, caractérisée en ce que les éléments des parois latérales (2, 3, 4, 5) sont disposés de manière que, suivant le cas, des éléments de paroi chauffants (14) ou, le cas échéant, des éléments de paroi (15) non chauffables, soient placés les uns en face des autres.

21. Cabine selon l'une des revendications 18 ou 19, caractérisée en ce que les éléments de paroi chauffants (14) sont disposés sur les côtés longs du rectangle et l'orifice d'évacuation d'air (19) est ménagée sur l'un des côtés courts du rectangle.

22. Cabine selon l'une des revendications précédentes, caractérisée en ce que les parois (15) non chauffables sont pourvues d'une couche réfléchissante (21).

23. Cabine selon l'une des revendications précédentes, caractérisée en ce que le chauffage radiant (13) présente deux capteurs de température (32, 33).

24. Cabine selon la revendication 23, caractérisée en ce que l'un des deux capteurs de température (32) est un capteur de température limite, qui est disposé dans au moins un élément de paroi (12), préférentiellement dans un élément de paroi chauffant (14).

25. Cabine selon l'une des revendications précédentes, caractérisée en ce que le chauffage radiant (13) présente un capteur de température (33) en ce mode de fonctionnement, disposé préférentiellement en au moins un exemplaire à l'intérieur de la cabine.

26. Cabine selon la revendication 23, caractérisée en ce que les deux capteurs de température (32, 33) ont une régulation à deux points.

27. Cabine selon l'une des revendications précédentes, caractérisée en ce que le chauffage radiant (13) a une sécurité (34) fusible pour une température en excès, disposée préférentiellement au-dessus du corps chauffant tubulaire (25).

28. Cabine selon l'une des revendications précédentes, caractérisée en ce qu'un corps chauffant tubulaire (25) du chauffage radiant (13) est maintenu, de façon amovible, à l'intérieur des éléments de paroi (12), par exemple par une fixation à écartement (26).
